# EUROPÄISCHE PATENTSCHRIFT

(11) **EP 0 812 997 B1**
(45) Veröffentlichungstag und Bekanntmachung des Hinweises auf die Patenterteilung: **10.01.2001**
(21) Anmeldenummer: 97106874.7
(22) Anmeldetag: 25.04.1997
(51) Int. Cl.: F16D 3/84

(54) **Welle zur Verbindung mit Antriebsgelenken**
Shaft for universal joints
Arbre pour joints de transmission

(30) Priorität: 15.06.1996 DE 29610546 U
(43) Veröffentlichungstag der Anmeldung: 17.12.1997
(73) Patentinhaber: GKN Gelenkwellenwerk Mosel GmbH, 08129 Mosel (DE)
(72) Erfinder: Jaenicke-Rössler, Michael, 08451 Crimmitschau (DE); Mehlhorn, Günter, 08066 Zwickau (DE)
(74) Vertreter: Neumann, Ernst Dieter, Dipl.-Ing.

(56) Entgegenhaltungen:
- DE-A- 2 927 648
- DE-A- 19 538 352
- DE-U- 8 516 967
- GB-A- 2 100 368
- GB-A- 2 102 915
- GB-A- 2 284 868

## Beschreibung

Die Erfindung betrifft eine Welle zur drehfesten Verbindung mit Antriebsgelenken, mit einem Wellenschaft und Wellenenden mit gegenüber dem Schaft größerem Durchmesser, die Wellenverzahnungen tragen, und mit Sitzringen auf dem Wellenschaft, die jeweils einen Sitz für einen Bund eines Faltenbalges von einem der Antriebsgelenke bilden. Derartige Wellen werden vorzugsweise in Antriebssträngen von Kraftfahrzeugen verwendet, hauptsächlich als Seitenwellen für die angetriebenen Räder. Da einerseits der Wellenschaft im Hinblick auf das Gewicht und den möglichen Beugewinkel der Antriebsgelenke im Durchmesser möglichst gering gehalten werden soll und zum anderen die verwendeten Wellenverzahnungen ein bestimmtes Drehmoment übertragen müssen, aber auch weil Gelenke nur in wenigen Standardgrößen verwendet werden, ist es üblich, die Wellenenden auf einen gegenüber dem Wellenschaft größeren Durchmessers warm anzustauchen. Hierdurch wird auch das anschließende Aufbringen der Wellenverzahnung erleichtert, das üblicherweise durch Kaltumformung erfolgt. Die genannten Verhältnisse gelten sowohl für Vollwellen als auch für Hohlwellen.

Vor der Montage der Antriebsgelenke sind Faltenbälge auf die Wellen aufzuziehen, die unter Anbindung an den Wellenschaft und das entsprechende Gelenkaußenteil die Antriebsgelenke abdichten. Die Innenteile der Antriebsgelenke werden auf den Wellenverzahnungen axial gesichert.

Heute verwendete Faltenbälge aus blasfähigem thermoplastischem Elastomer (TPE) - Markenname HYTREL; ARNITEL - haben eine äußerst geringe Elastizität, so daß der Durchmesser des Sitzes für den wellenseitigen Faltenbalgbund nicht wesentlich kleiner sein darf als der Durchmesser der Wellenenden mit den Wellenverzahnungen. Aus Kostengründen kommen Wellen, an denen ein solcher Sitz mit gegenüber dem übrigen Schaft größerem Durchmesser gedreht ist, nicht mehr in Betracht. Ebenfalls technisch möglich, aber unter Kostengesichtspunkten zu verwerfen, ist ein Herstellen des Sitzes für den Faltenbalgbund durch Mehrfachstauchen der Welle.

Um die genannten Faltenbälge auf der Welle festsetzen zu können, werden bisher geschlitzte Sitzringe aus Kunststoff verwendet, die auf den Wellenschaft aufgebracht werden und die dann den Sitz für den Bund des verwendeten Faltenbalges bilden. Über ein Spannband, mit dem der Bund des Faltenbalgs auf seinem Sitz festgespannt wird, wird zugleich der Sitzring selber auf dem Wellenschaft festgeklemmt. Der vom Sitzring gebildete Sitz hat hierbei etwa den Durchmesser des angestauchten Wellenendes.

Aus der DE 29 27 648 A1 ist es bereits bekannt geworden, bei Wellen, an die Gelenkkomponenten mit gegenüber dem Schaft deutlich größeren Durchmesser einstückig angeformt sind, Zwischenringe aus Kunststoff auf den Wellenschaft aufzuspritzen, die jeweils einen Sitz für einen Bund der Faltenbälge bilden. Hierbei fehlen Aussagen über die Vorbehandlung der Welle bzw. über sonstige Behandlungsschritte an der Welle.

Aus der DE 195 38 352 A1 ist eine Welle der genannten Art bekannt, bei der zwei Sitzringe einstückig mit einer den ganzen Welllenschaft überdeckenden Beschichtung zusammenhängend aufgespritzt werden, die als Korrosionsschutz dient. Nachteilig ist hierbei, daß ein großes Abstandsmaß zwischen den zwei Sitzringen ein aufwendiges Spritzgußwerkzeug erfordert. Darüberhinaus besteht die Schwierigkeit, die dünnwandige Beschichtung zwischen den Sitzringen mit relativ geringer Dicke fehlerlos zu spritzen.

Hiervon ausgehend liegt der vorliegenden Erfindung die Aufgaben zugrunde, eine Welle der genannten Art bereitzustellen, die bei uneingeschränkter Funktionalität preisgünstiger und qualitativ besser herstellbar ist. Die Lösung besteht darin, daß der Wellenschaft bis nahe an die Wellenenden mit einer Pulverbeschichtung versehen ist und daß die Sitzringe in situ erzeugt auf die Pulverbeschichtung aufgespritzt sind. Auf diese Weise wird zunächst die mechanische Fertigung der Welle so einfach wie möglich gehalten, indem ohne mechanische Bearbeitung des Schaftes nur die Wellenenden angestaucht und dort die Wellenverzahnungen gefertigt werden. Danach sind an dieser Welle alle Wärmebehandlungsschritte fertig auszuführen. Anschließend wird der Schaft der Welle mit bekannten Methoden mit einer Pulverbeschichtung versehen, die keiner besonderen an die Welle angepaßten Werkzeuge bedarf, sondern nur das vorrübergehende Abdecken der Verzahnungsbereiche an den Wellenenden erfordert. Abschließend werden die Sitzringe in entsprechenden kompakten Formwerkzeugen auf den pulverbeschichteten Wellenschaft aufgespritzt, wobei sich überraschenderweise ergibt, daß die Pulverbeschichtung einen guten Haftgrund für die Sitzringe darstellt. Die Pulverbeschichtung stellt einen dauerhaften Korrosionsschutz der gesamten Welle sicher. In vorteilhafter Weise verhindert die Pulverbeschichtung ein Unterrosten der Sitzringe. Gegenüber geschlitzten Sitzringen, die erst mit dem Faltenbalg selber zusammen fixiert werden, ist bei den erfindungsgemäßen aufgespritzten Sitzringen die Gefahr einer Fehlmontage oder einer Axialverstellung nicht gegeben, da das Material der Sitzringe fest am Material der Pulverbeschichtung haftet. Als Werkstoff für die Pulverbeschichtung ist ein trockenes, d. h. lösungsmittelfreies Thermoplastpulver auf Epoxidharzbasis mit hoher Beständigkeit gegen thermische Einflüsse geeignet, das in einer Schichtdicke von etwa 60 - 120 µm aufgetragen wird. Beim Beschichten werden die Pulverteilchen elektrostatisch aufgeladen und unter dem Einfluß elektrischer Feldkräfte zur geerdeten Welle transportiert, wo sie aufgrund der Coulombkräfte anhaften. Nach dem Aufsprühen des Pulvers erfolgt das Erhitzen der Welle auf 180°C und damit das Aufschmelzen der abgeschiedenen Pulverschicht zu einem geschlossenen Film.

Zur Erhöhung der Haftfestigkeit des Pulvers und zur Verbesserung des Korrosionsschutzes werden die Wellen vor der Pulverlakkierung einer Vorbehandlung durch Zinkphosphatierung unterzogen. Der ZnPh-Prozeß beinhaltet mehrere Entfettungs- und Spülstufen.

Bevorzugt wird ein Polyamid für die Sitzringe verwendet. Geeignet ist MIRAMID H3C schwarz 802 mit den Stoffwerten Schmelzbereich 218 - 225°C, Zug-E-Modul 3000 N/mm², Streckspannung 80 N/mm² und Schlagzähigkeit "bricht nicht".

In besonderer Ausgestaltung können die Sitzringe jeweils zur Schaftmitte hin liegend mit einem Anschlagbund für den Bund des Faltenbalges versehen sein, während sie zum Wellenende hin jeweils eine Abrundung zum erleichterten, beschädigungsfreien Aufschieben des Bundes des Faltenbalges haben.

Auf ihrem Umfang haben die Sitzringe vorzugsweise jeweils zumindest eine an die Gestaltung des Bundes des Faltenbalges angepaßte Umfangsnut. Allerdings ist auch eine rein zylindrische Form mit einem einzigen Anschlagbund zur axialen Fixierung möglich.

Zwei bevorzugte Ausführungsbeispiele sind nachstehend an Hand der Zeichnungen dargestellt.
- Figur 1: zeigt ein Wellenende mit einem Sitzring in einer ersten Ausgestaltung
- Figur 2: zeigt ein Wellenende mit einem Sitzring in einer zweiten Ausgestaltung

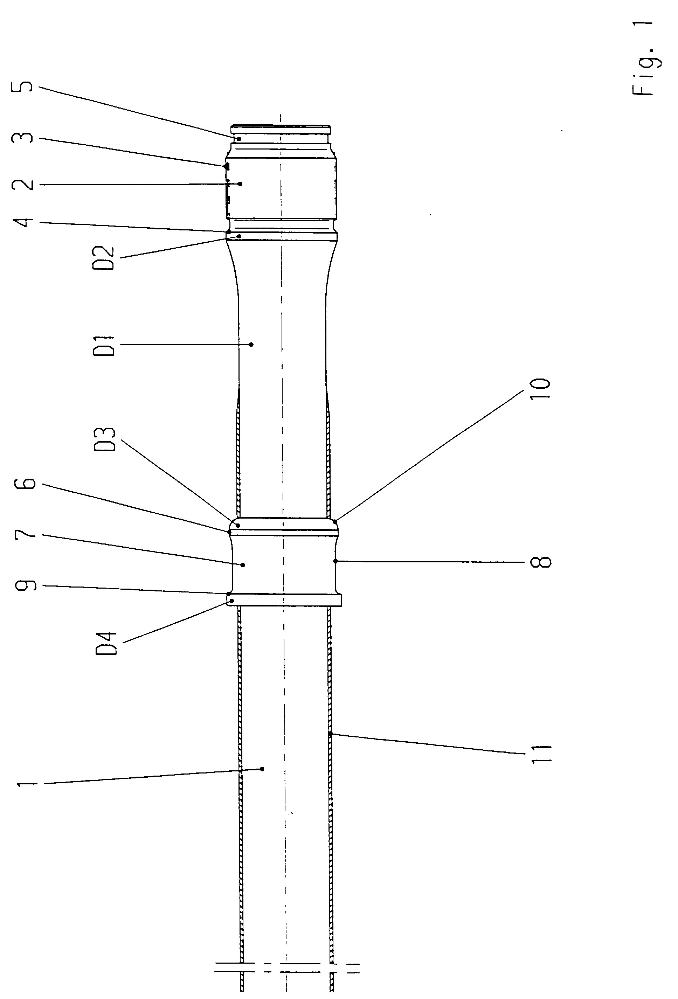

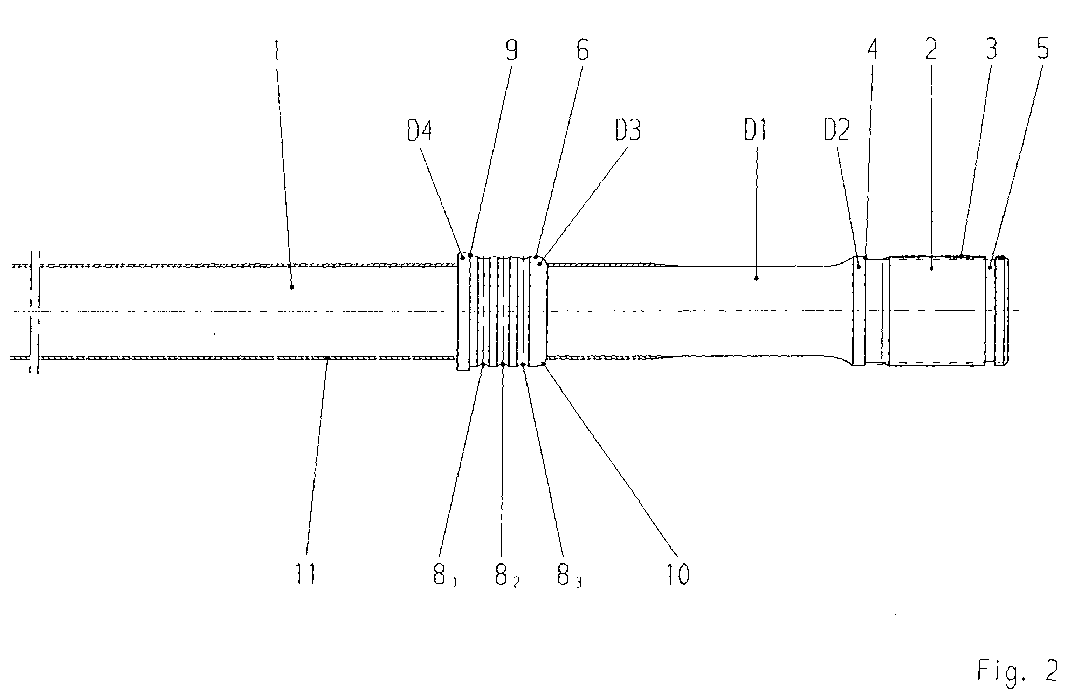

Die Figuren werden nachstehend zunächst gemeinsam beschrieben, wobei übereinstimmende Einzelheiten mit gleichen Ziffern bezeichnet sind. Es ist ein Wellenschaft 1 mit einem mit demgegenüber größeren Durchmesser ausgebildeten angestauchten Wellenende 2 erkennbar. Das Wellende 2 trägt eine Wellenverzahnung 3 und einen Bund 4 als Axialanschlag für ein Gelenkbauteil und eine Nut 5 zur Aufnahme eines Sicherungsringes. Der Durchmesser dl des Wellenschaftes 1 ist geringer als der größte Durchmesser d2 des angestauchten Wellenendes 2 im Bereich des Bundes 4. Der Wellenschaft 1 ist auf seiner gesamten Länge mit Ausnahme des Wellenendes 2 mit einer erfindungsgemäßen Beschichtung 11 versehen. Auf die Beschichtung 11 ist im vorgegebenen Abstand vom Wellenende 2 ein Sitzring 7 für den Bund eines Faltenbalges aufgespritzt. Dieser weist einen vom Bund des Faltenbalges zu überwindenden ersten Bund 6 mit einem Durchmesser d3 auf, der etwa dem größten Durchmesser d2 des Wellendes entspricht. Hinter diesem Durchmesser befindet sich eine Ringnut 8 (Figur 1) bzw. drei Ringnuten 8₁, 8₂, 8₃ (Figur 2) in die der Bund des Faltenbalges einschnappt. Dahinter, zur Wellenmitte gelegen ist ein Anschlagbund 9 vorgesehen, dessen Durchmesser d4 größer d3 ist. Zum Wellenende hin weist der Sitzring 7 eine Rundung 10 zum erleichterten Aufschieben eines Faltenbalges auf. Das jeweils zweite nicht dargestellte Wellenende ist mit prinzipiell gleichen Größenverhältnissen zwischen Wellenschaft, angestauchtem Wellenende und Sitzring anzunehmen, wobei die Form des Sitzringes sich den angegebenen Prinzipien verfolgen kann.

## Patentansprüche

1. Welle zur drehfesten Verbindung mit Antriebsgelenken, mit einem Wellenschaft (1) und Wellenenden (2) mit gegenüber dem Schaft (1) größerem Durchmesser, die Wellenverzahnungen (3) tragen, und mit Sitzringen (7) auf dem Wellenschaft (1), die jeweils einen Sitz für einen Bund eines Faltenbalges von einem der Antriebsgelenke bilden,
dadurch gekennzeichnet,
daß der Wellenschaft (1) bis nahe an die Wellenenden (2) mit einer Pulverbeschichtung (11) versehen ist und daß die Sitzringe (7) in situ erzeugt auf die Pulverbeschichtung (11) aufgespritzt sind.

2. Welle nach Anspruch 1,
dadurch gekennzeichnet,
daß die Sitzringe (7) jeweils zur Wellenmitte liegend einen Anschlagbund (9) aufweisen.

3. Welle nach einem der Ansprüche 1 oder 2,
dadurch gekennzeichnet,
daß die Sitzringe (7) zum Wellenende jeweils einen Abschluß mit einer Rundung (10) aufweisen.

4. Welle nach einem der Ansprüche 1 bis 3,
dadurch gekennzeichnet,
daß die Sitzringe (7) jeweils über mindestens eine Umfangsnut (8) verfügen, die zum Eingriff mit einem Faltenbalgbund vorgesehen ist.

5. Welle nach einem der Ansprüche 1 bis 4,
dadurch gekennzeichnet,
daß die Pulverbeschichtung (11) aus Epoxidharz, insbesondere in einer Schichtdicke von 60 - 120 µm besteht.

6. Welle nach einem der Ansprüche 1 bis 5,
dadurch gekennzeichnet,
daß die Sitzringe (7) aus Polyamid hergestellt sind.

## Claims

1. A shaft for being connected in a rotationally fast way to driving joints, having a shaft shank (1) and shaft ends (2) whose diameter is greater than that of the shank (1) and which carry shaft toothings (3), and having seat rings (7) on the shaft shank (1), which seat rings (7) each form a seat for a collar of a convoluted boot of one of the driving joints,
characterised in
that the shaft shank (1), up to the region close to the shaft ends (2), is provided with a powder coating (11) and that the seat rings (7) are produced in situ by injection molding on to the powder coating (11).

2. A shaft according to claim 1,
characterised in
that, towards the shaft centre, the seat rings (7) each comprise an abutment collar (9).

3. A shaft according to any one of claims 1 or 2,
characterised in
that, towards the respective shaft end, the seat rings (7) each have an end formed as a rounded portion (10).

4. A shaft according to any one of claims 1 to 3,
characterised in
that the seat rings (7) each are provided with at least one circumferential groove (8) for being engaged by a collar of a convoluted boot.

5. A shaft according to any one of claims 1 to 4,
characterised in
that the powder coating (11) consists of epoxy resin, especially with a coating thickness of 60 - 120 µm.

6. A shaft according to any one of claims 1 to 5,
characterised in
that the seat rings (7) are produced of polyamide.

## Revendications

1. Arbre destiné à la liaison solidaire en rotation avec des joints de transmission, comprenant un fût d'arbre (1) et des extrémités d'arbre (2) avec un diamètre agrandi par rapport à celui du fût (1) et qui portent des dentures d'arbre (3), et comprenant des bagues d'assise (7) sur le fût de l'arbre (1), formant chacune un siège pour une collerette d'un soufflet de l'un des joints de transmission,
caractérisé en ce que le fût de l'arbre (1) est pourvu jusqu'au voisinage des extrémités du fût de l'arbre (2) d'un revêtement en poudre (1) et en ce que les bagues d'assise (7) sont réalisées in situ par injection sur le revêtement en poudre (11).

2. Arbre selon la revendication 1,
caractérisé en ce que les bagues d'assise (7) présentent chacune une collerette de butée (9) située vers le milieu de l'arbre.

3. Arbre selon l'une ou l'autre des revendications 1 et 2,
caractérisé en ce que les bagues d'assise (7) présentent chacune vers les extrémités d'arbre un élément terminal présentant un arrondi (10).

4. Arbre selon l'une des revendications 1 à 3,
caractérisé en ce que les bagues d'assise (7) présentent chacune au moins une rainure périphérique (8), prévue pour l'engagement avec une collerette d'un soufflet.

5. Arbre selon l'une des revendications 1 à 4,
caractérisé en ce que le revêtement en poudre (11) est constitué par une résine époxy, en particulier avec une épaisseur de couche de 60 à 120 microns.

6. Arbre selon l'une des revendications 1 à 5,
caractérisé en ce que les bagues d'assise (7) sont réalisées en polyamide.
